Europäisches Patentamt

European Patent Office

Office européen des brevets

(19)

(11) Veröffentlichungsnummer: **0 181 995**
**B1**

(12) **EUROPÄISCHE PATENTSCHRIFT**

(45) Veröffentlichungstag der Patentschrifft:
21.03.90

(21) Anmeldenummer: 85104472.7

(22) Anmeldetag: 12.04.85

(51) Int. Cl.⁵: **B 29 C 63/18**, B 29 C 65/64

(54) Verfahren zur Umkleidung eines Steigungskabels mit einer Kunststoffschicht.

(30) Priorität: 22.11.84 DE 3442494

(43) Veröffentlichungstag der Anmeldung:
·28.05.86 Patentblatt 86/22

(45) Bekanntmachung des Hinweises auf die Patenterteilung:
21.03.90 Patentblatt 90/12

(84) Bennante Vertragsstaaten:
FR GB IT NL SE

(56) Entgegenhaltungen:
DE-A-3 015 965
DE-C-676 671
DE-C-827 550

(73) Patentinhaber: KÜSTER & Co. GmbH
Am Bahnhof
D-6332 Ehringshausen (DE)

(72) Erfinder: Burghardt, Franz
Bachstrasse 25
D-6334 Asslar (DE)

LIBERGRAF, STOCKHOLM 1990

**Beschreibung**

Die Erfindung betrifft ein Verfahren zur Umkleidung eines Steigungskabels auf einer definierten Länge mit einer Kunststoffschicht, gemäß den Oberbegriff des Anspruchs.

Unter Steigungskabel sei hier und im folgenden ein Draht bzw. eine aus mehreren Einzeldrähten verseilte Litze verstanden, um die mit einer gleichbleibenden Steigung ein einzelner Draht (Steigungswendel) gewickelt ist. Derartige Steigungskabel haben im Querschnitt in Längsrichtung der Achse die Form einer Zahnstange und können demzufolge in ein Ritzel mit gleicher Steigung eingreifen und bei Längsverschiebung das Ritzel drehen bzw. von dem sich drehenden Ritzel selbst längsverschoben werden.

Die Steigungskabel haben gegenüber starren Zahnstangen den Vorteil biegbar zu sein und trotzdem mechanische Zug- und Druckkräfte übertragen zu können. Sie können daher, unter Berücksichtigung gewisser Mindestradien, im Bogen verlegt werden. Weil sie jedoch biegbar sind, müssen sie zur Ausnützung des Zahnstangeneffektes in einem Rohr geführt werden, das dann an der Stelle des Ritzeleingriffes freigeschnitten ist.

Gewöhnlich wird jedoch immer nur ein begrenzter Abschnitt des Steigungskabels in seiner Zahnstangenfunktion ausgenutzt; der Rest des Kabels dient einfach der Kraftübertragung in Längsrichtung des Kabels, das aber, wie gesagt, im Bogen verlegt sein kann. Eine solche Verwendung finden Steigungskabel z. B. im Antriebsmechanismus von Schiebedächern bei Automobilen. Gewöhnlich werden dort zwei Längen von Steigungskabeln verwendet, die an der vorderen Querseite der Dachöffnung auf entgegengesetzten Seiten eines Ritzels mit diesem kämmen. Bei Drehung des Ritzels, z. B. mittels einer Kurbel, werden die beiden Steigungskabellängen nach entgegengesetzten Seiten längsverschoben und verschieben dabei das Schiebedach, mit dem die freien Enden der beiden Kabel in geeigneter Weise mechanisch verbunden sind.

Die beiden Kabel werden in einem Rohr geführt, aber es ist leicht verständlich, daß nur jeweils eine kurze Länge des Kabels quasi als Zahnstange benutzt wird, das übrige Kabel dient einfach der Kraftübertragung zum Schiebedach. Diese Länge ist dann auch um die Ecke herum im Bogen verlegt.

Es hat sich nun schon lange als nachteilig herausgestellt, daß die nicht in das Ritzel eingreifenden, und daher von diesem nicht gehaltenen oder unterstützten Kabellängen dazu neigen, in ihren Führungsrohren zu klappern und dadurch störende Geräusche zu erzeugen. Daher besteht auch schon lange die Aufgabe, die Kabel in den Führungsrohren festzulegen, um eben dieses Klappern abzustellen. Diese Aufgabe konnte bisher nicht zufriedenstellend gelöst werden. Z.B. ist schon versucht worden, das Steigungskabel auf der nicht als Zahnstange benötigten Länge mit Kunststoff-Fasern zu beflocken (DE-A-3 015 965). Dies erwies sich jedoch als völlig ungeeignet, weil die Fasern zu weich sind und sich beim Verschieben des Kabels an den Stellen der stärksten Beanspruchung relativ schnell abreiben.

Es ist auch schon versucht worden, über das Steigungskabel einen Schrumpfschlauch zu ziehen, d.h. einen Kunststoffschlauch, der sich bei nachfolgender Erwärmung zusammenzieht und so auf dem Kabel festsitzt. Aber das für die Schrumpfung geeignete Material hat sich ebenfalls als zu weich erwiesen und im Betrieb sehr schnell abgenutzt. In der DE-C- 676 671 wurde auch bekannt gegeben ein Kunststoffrohr durch ein Klopfwerk auf einem drahtförmigen Gegenstand festzuhämmern.

Der Erfindung liegt daher die Aufgabe zugrunde, ein Verfahren anzugeben, mit dem ein Steigungskabel auf eine gewünschte, relativ kurze Länge mit einem festen Kunststoffüberzug versehen werden kann.

Diese Aufgabe ist durch ein Verfahren gelöst, das die im Anspruch 1 angegebenen Verfahrensschritte aufweist.

Diese Schritte bestehen darin, zuerst den Außendurchmesser der zu umkleidenden Kabellänge etwas herunterzuhämmern, das Kunststoffrohr überzuziehen, und danach das Kunststoffrohr festzuhämmern. Das herunterhämmern das Außendurchmessers der zum umkleiden Kabellänge ergibt eine Kunststoffumkleidung die im Außendurchmesser nicht wesentlich größer ist als der ursprüngliche Außendurchmesser des Steigungskabel. Das Festlegen geschieht dabei dadurch, daß ein Teil des Kunststoffrohres in die Quasi-Gewindegänge des Steigungswendels hineingetrieben wird. Die äußere Krafteinwirkung kann vor allem aus Hämmern bestehen. In der Praxis bedeutet dies, daß das Steigungskabel mit übergezogenem Kunststoffrohr in dessen Länge durch eine der bekannten Hämmermaschinen geschoben wird. Es sind aber auch andere äußere Krafteinwirkungen denkbar, wie z. B. das Rollen. Die Art der Krafteinwirkung hat für das erfundene Verfahren keine Bedeutung. Jede zweckmäßige Krafteinwirkung kann angewendet werden.

Der Vorteil des Verfahrens besteht darin, daß dabei ein Rohr aus einer Kunststoffart verwendet werden kann, die härter ist, als sie früher bei der Beflockung bzw. bei den Schrumpfschläuchen verwendet werden mußte. Diese härteren Kunststoffarten halten die mechanischen Beanspruchungen bei der Kabelverschiebung und die dadurch bedingte Reibung an der Innenwand des Führungsrohres – auch im Rohrbogen- ohne weiteres aus. Sie sind weitgehend abriebfest. Versuchsmuster haben bereits unbeschädigt Betätigungszyklen überstanden, die in ihrer Zahl weit über den von den Automobilherstellern geforderten Zyklenzahlen liegen.

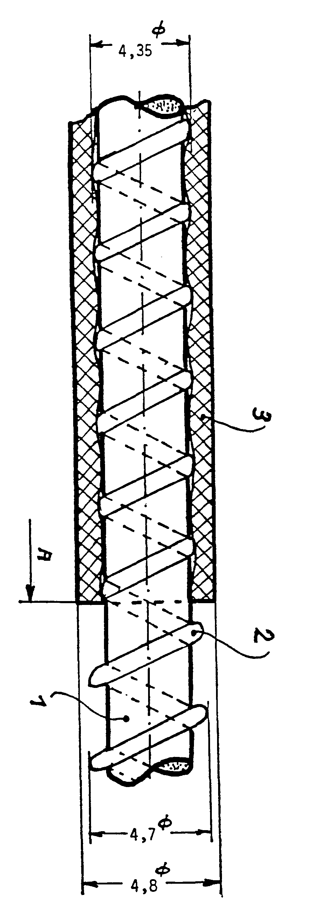

In der Zeichnung ist ein Ausführungsbeispiel im Querschnitt in Längsrichtung des Steigungskabels dargestellt, bei dem die einzelnen Durchmesser angegeben sind.

Das Steigungskabel 1 hat mit seinem Steigungswendel 2 einen Außendurchmesser von 4,7 mm, der zunächst auf der zu umkleidenden Kabellänge auf 4,35 mm heruntergehämmert wird. Das Kunststoffrohr 3 hat ursprünglich einen Außendurchmesser von 5,5 mm und einen Innendurchmesser von 4,5 mm. Mit diesen Abmessungen wird das Rohr 3 über die heruntergehämmerte Kabellänge →A geschoben und danach selbst im Durchmesser heruntergehämmert. Im Endzustand hat die Kunststoffumkleidung dann einen Außendurchmesser von 4,8 mm. Bei diesem Vorgang ist ein Teil der Kunststoffrohrinnenwand in den Zwischenraum zwischen die Gänge des Steigungswendels getreten und bewirkt so das Festsitzen der Kunststoffumkleidung auf dem Kabel. Die umkleidete Kabellänge ist somit im Außendurchmesser nur unwesentlich größer als die freie Kabellänge, nämlich gerade so viel größer, um das Spiel im Führungsrohr auszufüllen und trotzdem leicht darin zu gleiten.

## Patentanspruch

Verfahren zur Umkleidung eines Steigungskabels mit einer Kunststoffschicht, die in ihrem Außendurchmesser nicht wesentlich größer sein darf, als der Außendurchmesser des nichtumkleideten Kabels, *dadurch gekennzeichnet*, daß das Steigungswendel (2) des Steigungskabels (1) durch eine äußere Krafteinwirkung auf einen geringeren Außendurchmesser reduziert wird, daß über die zu umkleidende Länge (→A) des Steigungskabels (1) ein Kunststoffrohr (3) geschoben wird, und daß dieses Kunststoffrohr (3) in an sich bekannter Weise durch eine äußere Krafteinwirkung auf dem Steigungskabel (1) in einer solchen Weise festgelegt wird, daß unter Verringerung seines Außendurchmessers auf etwa den Durchmesser des nichtumkleideten Kabels mindestens ein Teil der Kunststoffrohrinnenwandung zwischen die Gänge des Steigungswendels (2) tritt.

## Claim

Method for the sheathing of a drive cable with a synthetic material layer which must not be substantially larger in its external diameter than the external diameter of the unsheathed cable, characterised thereby, that the pitch coil (2) of the drive cable (1) is reduced to a smaller external diameter by an external force influence, a synthetic material tube (3) is pushed over the length (→A), which is to be sheathed, of the drive cable (1) and that this synthetic material tube (3) is fixed in an in itself known manner on the drive cable (1) by an external force influence in such a manner that, under reduction of its external diameter to about the diameter of the unsheathed cable, at least a part of the inward synthetic material wall enters between the threads of the pitch coil (2).

## Revendication

Procédé pour l'enrobage d'un câble de transmission par une couche de matière plastique, dont le diamètre extérieur ne peut être sensiblement plus grand que celui du câble non enrobé, caractérisé par le fait que l'hélice (2) du câble de transmission (1) est réduite à un diamètre extérieur plus faible par application d'une force extérieure, en ce qu'un tuyau de matière plastique (3) est enfilé sur la longueur à enrober (→A) du câble de transmission (1) et en ce que le tube de matière plastique (3) est fixé sur le câble de transmission (1) d'une manière connue en soi par application d'une force extérieure, de telle sorte que son diamètre extérieur étant réduit à approximativement le diamètre du câble non enrobé, une partie au moins de la cloison interne du tube de matière plastique pénètre entre les spires de l'hélice (2).